# EUROPEAN PATENT SPECIFICATION

(11) **EP 2 911 862 B1**
(45) Date of publication and mention of the grant of the patent: **11.04.2018**
(21) Application number: 13753430.1
(22) Date of filing: 27.08.2013
(51) Int. Cl.: B29C 65/48, B29C 65/00, F16B 11/00

(54) **COMPOSITE JOINING COMPONENT AND METHOD FOR THE PRODUCTION THEREOF**
BAUTEILVERBINDUNGSKOMPONENTE UND VERFAHREN ZUR HERSTELLUNG DAVON
COMPOSANT D'ASSEMBLAGE COMPOSITE ET PROCÉDÉ DE PRODUCTION CORRESPONDANT

(30) Priority: 24.10.2012 DE 102012021210
(43) Date of publication of application: 02.09.2015
(73) Proprietor: Newfrey LLC, New Britain, CT 06053 (US)
(72) Inventor: BURKHARDT, Florian, 35394 Giessen (DE); BRIEDEN, Thomas, 35394 Giessen (DE); DIETZ, Simon, 35394 Giessen (DE); SCHNEIDER, Joachim, 35394 Giessen (DE); DREXLER, Frank, 35394 Giessen (DE)
(74) Representative: Witte, Weller & Partner Patentanwälte mbB
(86) International application number: PCT/EP2013/067688
(87) International publication number: WO 2014/063850

(56) References cited:
- EP-A1- 1 456 543
- DE-A1- 10 143 542
- US-A- 4 636 124

## Description

The present invention relates to a composite joining component having a joining component having a joining axis, having a joining surface, which extends transversely to the joining axis, and having an anchor section, wherein an application section for the application of an adhesive is formed on the joining surface, the composite joining component further having a drop of adhesive applied to the application section.

Moreover, the present invention relates to a method for producing a composite joining component, comprising the following steps: provision of a joining component, which has a joining surface extending transversely to a joining axis, application of a heated adhesive to at least one application section of the joining surface, and cooling of the adhesive or allowing the adhesive to cool such that the composite joining component produced in this way can be transported and the adhesive can be reactivated at a later time in order to bond the joining component to a workpiece.

In the engineering field of joining joining components or fastening elements to workpieces, one known practice is to weld metal studs to metal workpieces, for example. This method, which is known as "stud welding", is used especially in the automotive industry in order to weld studs to body panels, with fastening clips made of plastic subsequently being attached to the studs, and cables, lines etc. being fixed to said clips.

Another known practice is to weld such plastic fastening elements to plastic workpieces by thermoplastic processes.

Finally, there is a known practice of adhesively bonding joining components in the form of such fastening elements to workpieces. Owing to the fact, in particular, that nonmetallic composite materials, such as plastics, fibre composite components etc, are increasingly being used in motor vehicle body assembly, the adhesive bonding technique has become established as a fastening method, especially in body assembly.

In general terms, the practice of applying an adhesive to a joining surface of a joining component, wherein the adhesive, which is as a rule applied hot, then cools and dries, is known. The composite joining component produced in this way is then supposedly capable of being transported, e.g. from a production point to a point at which the composite joining component is to be adhesively bonded to the workpiece, e.g. a body panel.

During the actual adhesive bonding process, the adhesive is then activated or reactivated, with the adhesive usually being reheated. The adhesives used for this purpose are designed to crosslink within a relatively short time during the adhesive bonding process, making it possible to achieve an adhesive joint within time intervals of less than 60 seconds, in particular less than 30 seconds, preferably less than 10 seconds.

In motor vehicle body assembly, a multiplicity of such joining components in the form of fastening elements is generally adhesively bonded to body sections. This is generally accomplished by means of automated robot systems in which the joining components are fed automatically.

Document EP 0 741 842 B1 discloses the application of a hot-melt adhesive to the joining surface of a joining component by lowering the joining component onto the surface of a bath of hot-melt adhesive and raising it again. After drying, the fastening elements are then supposedly suitable for packing and transportation without the risk of sticking together. This document also discloses forming a lip on the outer edge of the adhesive bonding surface, this being intended to prevent a build-up of stress concentrations in the edge zones of the adhesive bonding layers. This is intended to ensure that the adhesive action of an adhesively bonded fastening element can adequately withstand even the action of lateral forces on the head of the stud and the associated peeling effect.

Document EP 1 456 543 B1 discloses fastening elements which have an adhesive bonding surface, which is coated with an adhesive that can be melted. This document proposes to form an expansion groove in the joining surface radially to the outside of the adhesive, this expansion groove being intended to prevent excess adhesive from welling out at the edge of the adhesive bonding surface during the actual adhesive bonding process and giving the adhesive joint an unattractive appearance.

Document DE 10 2004 031 551 B4 discloses a fastening arrangement having a fastening part which has a fastening section with a plane surface. Moreover, the fastening part has a receiving recess. A hot-melt adhesive in the form of a pellet is inserted into the receiving recess. Retention tongues, which can fix the pellet by positive engagement, are provided on an inner bottom wall of the receiving recess. Moreover, this document discloses the provision of grooves at the edge of the receiving recess, and these grooves can retain such a pellet of hot-melt adhesive more effectively.

Finally, document DE 10 2009 042 467 A1 discloses a method for joining a fastening element to a surface section of a component, wherein the fastening element has an adhesive bonding surface to which an adhesive that can be melted and cured thermally is applied, wherein, to carry out the adhesive bonding process, the adhesive is first of all heated to a first temperature in order to activate the adhesive, wherein the surface section is heated to a second temperature, wherein the adhesive bonding surface is then placed on the surface section, and wherein the adhesive is then heated to a third temperature in a main heating operation in order to cure the adhesive and fasten the fastening element permanently on the component.

This document discloses the application of the adhesive to the entire flange surface of a flange-shaped fastening element. It furthermore discloses providing small projections on the flange surface, said projections serving as spacer elements in order to ensure a predetermined thickness of the ultimately produced adhesive layer during the adhesive bonding process, substantially independently of the force with which the fastening element is pressed onto the component.

This document furthermore discloses devices for carrying out the method.

In the abovementioned methods for producing composite joining components and for producing adhesive joints by means of such composite joining components, the adhesive achieves its maximum strength only during the final adhesive bonding process. In the transportation phase, the adhesive is sensitive to thermally induced stresses and mechanical loads. This can lead to the breaking of the bond between the adhesive and the joining component even before the final joining position is reached and to the loss of one of the two elements of the composite. This can occur, for example, during transportation, if such composite joining components are handled in bulk form, and/or during automated feeding from a reservoir to a robotic joining unit.

Given this background, it is an object of the invention to indicate an improved joining component, an improved composite joining component and an improved method for producing a composite joining component, which preferably avoids at least one of the disadvantages described above.

The above object is achieved, on the one hand, by a composite joining component, which comprises a joining component having a joining axis, having a joining surface, which extends transversely to the joining axis, and having an anchor section, wherein an application section for the application of an adhesive is formed on the joining surface, wherein at least one annular contour surface is formed on the application section, said contour surface being aligned transversely to the joining surface and being arranged radially within an outer circumference of the application section, and which comprises a drop of adhesive applied to the application section in a hot, liquid, uncrosslinked state, wherein a non positive gripping effect between the adhesive and the annular contour surface is achieved during shrinkage and a differential thermal expansion of the joining component and the adhesive.

Finally, the above object is achieved by a method for producing a composite joining component according to the invention, comprising the following steps: provision of a joining component, which has a joining surface extending transversely to a joining axis, application of a heated adhesive to at least one application section of the joining surface, and cooling of the adhesive or allowing the adhesive to cool such that the composite joining component produced in this way can be transported and the adhesive can be reactivated at a later time in order to bond the joining component to a workpiece, wherein an annular contour surface, which extends transversely to the joining surface and around which the adhesive is applied, is formed on the application section.

The present invention is consequently concerned especially with improving the adhesion of the re-meltable adhesive, in particular of reactive hot-melt adhesives, to the joining component. Before being activated and chemically crosslinked, reactive hot-melt adhesives usually have relatively poor cohesive strength, and this promotes the separation of the composite consisting of the adhesive and the joining component during transportation or the like.

Until now, the heated, melted adhesive has been applied to a plane joining surface. As the joining component and the adhesive cool, the two composite elements draw together in accordance with their respective coefficients of thermal expansion. In addition, contraction effects may occur in the adhesive. This may give rise to thermal stresses in the composite, promoting the formation of cracks between the adhesive and the application section and thus facilitating detachment of the adhesive. Such crack formation may be intensified by temperature fluctuations below the glass transition temperature of the hot-melt adhesive.

The formation of an annular contour surface which is aligned transversely to the guide surface or transversely to the application section and which is arranged radially within an outer circumference of the application section makes it possible to apply the adhesive around the annular contour surface. In the hot, liquid, uncrosslinked state, the adhesive melt fills this annular contour surface, preferably completely. During shrinkage and the differential thermal expansion of the joining component and the adhesive, a nonpositive gripping effect between the adhesive and the annular contour surface is preferably achieved, especially in the radial direction.

Since cracking within the adhesive occurs less readily than at the interface between the adhesive and joining component, this effect can improve the adhesion of the adhesive overall to the application section.

The annular contour surface is preferably covered completely by the adhesive applied.

Overall, an annular contour surface of this kind exploits the physical effects of differential thermal expansion and/or contraction of the adhesive and the joining component to improve adhesion between the adhesive and the joining component before the adhesive is activated or reactivated and adhesion builds up through chemical crosslinking.

Accordingly, the composite joining components produced in this way are entirely suitable for bulk handling since the pre-applied adhesive cannot come off as easily. Moreover, it is possible to feed composite joining components of this kind from a bin to a robotic joining head in an automated process by means of feeding devices without the risk that the adhesive will become detached from the joining component during this operation.

Quality problems with manual handling can thereby be avoided as well. The joining component is preferably produced in one piece and/or from metal.

According to a preferred embodiment of the joining component according to the invention, the annular contour surface has at least two contour segments, which are arranged diametrically with respect to the joining axis and each extend over an angular range of at least 10°, in particular over an angular range of at least 30°, preferably over an angular range of at least 45° and particularly preferably over an angular range of at least 60°.

In this embodiment, the annular contour surface is not designed as a single surface but is formed by at least two or more contour surface segments, which are arranged along an annular contour and preferably complement one another to give an at least partially continuous, preferably a largely continuous, ring. In this case, a spacing, which may even be greater than 90°, in accordance with the angles stated above, can be provided in each case between the contour segments in the circumferential direction.

By virtue of the measure that the contour surfaces lie diametrically opposite with respect to the joining axis, and the adhesive preferably contracts in the radial direction, the effect that the adhesive "grips" or surrounds the diametrically opposite contour surfaces in the radial direction is already achieved in this embodiment as well, thereby improving the adhesion of the adhesive to the application section.

According to another preferred embodiment, the annular contour surface is designed to run around the joining axis.

In this embodiment, the radial gripping effect described above can take place in all radial directions, and therefore the adhesion between the adhesive and the application section is improved even further.

It is furthermore preferred overall if the annular contour surface or contour segments is/are arranged concentrically with respect to the joining axis.

As a result, the gripping forces described above act symmetrically with respect to the joining axis, ensuring that the composite joining component is highly symmetrical, which improves suitability for bulk handling.

In general, the annular contour surface can have any desired shape in axial plan view, being polygonal, star-shaped, gear-shaped or the like, for example.

However, it is particularly preferred if the annular contour surface is in the form of a circular ring.

An annular contour surface of this kind can be produced at low cost.

In general, it is also conceivable for the annular contour surface to be aligned obliquely relative to the joining surface, thus forming an undercut, for example. However, it is preferred if the annular contour surface is aligned perpendicularly to the joining surface and/or preferably parallel to the joining axis.

As a result, it is likewise possible to simplify the production of the annular contour surface. It is furthermore particularly preferred if the joining component is produced from a metal. In some of the abovementioned embodiments, the annular contour surface can be produced by cold forming, thus enabling the joining component to be made available at low cost.

According to a first preferred embodiment, the annular contour surface is formed at least partially by a radial inner wall of a groove, which is formed in the joining surface, wherein the diameter of the inner wall is less than an outside diameter of the application section.

In this case, the bottom of the groove is set back axially relative to the joining surface. In the method according to the invention, the adhesive is preferably applied to the application section as a drop, with the drop forming a lens shape on the application section.

In this case, the drop of adhesive is preferably applied in such a way that the adhesive completely fills the groove.

In this case, the outside diameter of the drop of adhesive applied is preferably greater than the outside diameter of the groove.

However, the outside diameter of the application section is preferably less than the outside diameter of the joining surface.

As described above, the groove can be designed as an encircling annular groove but it can also be formed by a plurality of circumferentially spaced groove segments.

However, the production of an encircling groove is easier to implement in terms of production engineering.

According to an alternative preferred embodiment, the annular contour surface is formed at least partially by a radially outer wall of a projection, which projects relative to the joining surface and the outside diameter of which is less than an outside diameter of the application section.

In particular, the projection can be a circular projection arranged concentrically with respect to the joining axis.

In general, it is conceivable for the joining surface to be formed by the upper side of the projection.

However, the height of the projection is preferably less than or equal to the desired thickness of the adhesive layer on completion of the adhesive bonding process.

In this case, the projection may serve as a spacer projection, as described in document DE 10 2009 042 467 A1, which was mentioned at the outset.

The joining component can, for example, have a flange section, on the underside of which the joining surface is formed, and an anchor section in the form of a stem, which extends from the opposite side of the flange section.

In this embodiment, the projection can be formed integrally with the flange section, e.g. by cold forming.

In an alternative embodiment, the projection can be formed by the stem. In this embodiment, the joining component is composed of a stem and of an annular flange element, wherein the stem passes through a central aperture in the flange element and forms the projection on the side on which the joining surface is located.

In all the abovementioned embodiments, it is preferred if at least one spacer projection, which is arranged radially to the outside of the annular contour surface, is formed on the joining surface.

A spacer projection of this kind, as described above, can be used to establish a fixed spacing between the joining surface and the surface of the workpiece when the adhesive bonding process is being carried out.

With the composite joining component according to the invention, it is particularly preferred if the annular contour surface has an axial height which is greater than 0.3 times the axial height of the drop of adhesive. The axial height of the annular contour surface is preferably greater than 0.5 times the axial height of the drop of adhesive, in particular greater than 0.8 times the axial height of the drop of adhesive, and particularly preferably greater than the axial height of the drop of adhesive applied to the joining surface.

In the case of the method according to the invention, it is advantageous, as mentioned above, if the adhesive is applied to the application section as a drop, with the drop forming a lens shape on the application section.

In the case of the method according to the invention, it is furthermore advantageous if the joining component is produced by cold forming, thus enabling the joining component to be provided at low cost.

The joining component is preferably produced from a metal. The adhesive is preferably a hot-melt adhesive.

Depending on the embodiment, at least one of the following advantages and/or at least one of the following embodiments can be achieved with the present invention.

Thus, in being applied to the application section in the melted state, the adhesive can be metered onto the heated centre of the joining surface and therefore then forms a lens-shaped drop.

Owing to the annular contour surface, an improvement in adhesion during transportation to the subsequent joining location is obtained. On the composite joining component, the annular contour surface is preferably completely covered with adhesive. The annular contour surface can be formed in an adhesive-covered region of a recess, in particular a groove with an upward-extending inner contour which allows nonpositive gripping due to temperature-related shrinkage. By means of the invention, the differential thermal expansion and/or contraction of the joining component and the adhesive is exploited. The composite joining components are suitable for bulk handling.

Instead of a recess or groove, on the inner contour of which the annular contour surface is formed, the annular contour surface can also be formed by a projecting contour, which is preferably arranged in the centre of the application section and is completely or partially covered by the adhesive.

The annular contour surface can furthermore have an advantageous effect on the maximum achievable bonding strength since adhesion between a ZnNi coating and the joining component, for example, may be improved.

It goes without saying that the features mentioned above and those which remain to be explained can be used not only in the respectively indicated combination but also in other combinations or in isolation without exceeding the scope of the present invention.

Illustrative embodiments of the invention are shown in the drawing and are explained in greater detail below in the following description. In the drawing:
- Fig. 1: shows a schematic longitudinal section through a composite joining component in accordance with a first embodiment of the invention;
- Fig. 2: shows a perspective schematic view of an embodiment of a joining component according to the invention;
- Fig. 3: shows a schematic longitudinal section through another embodiment of a composite joining component according to the invention;
- Fig. 4: shows a schematic longitudinal section through another embodiment of a composite joining component according to the invention; and
- Fig. 5: shows a schematic plan view of a joining surface of another embodiment of a joining component according to the invention.

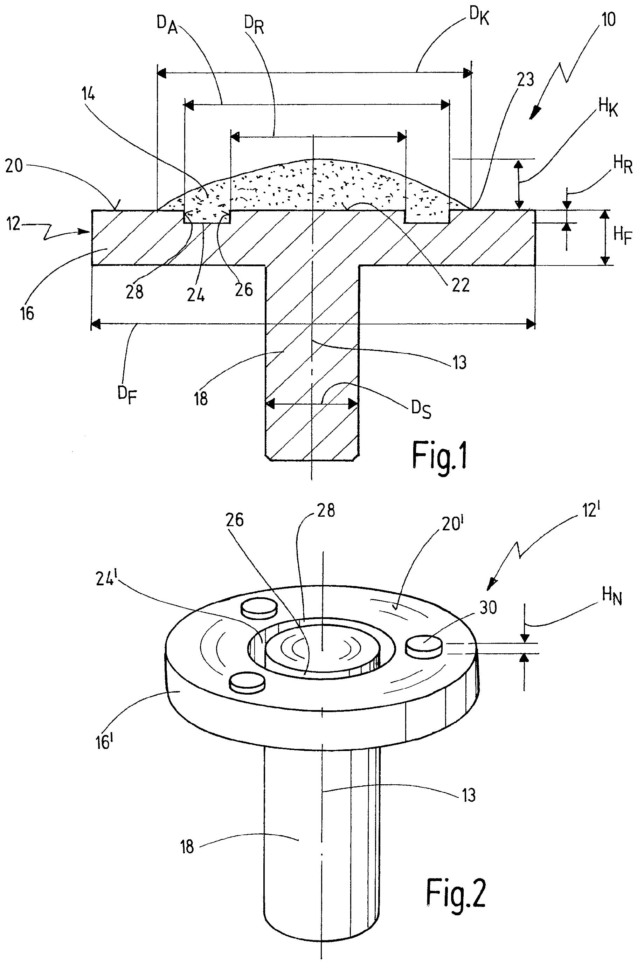

In Fig. 1, a first embodiment of a composite joining component is shown schematically in longitudinal section and denoted overall by 10.

The composite joining component 10 comprises a joining component 12, which is aligned along a joining axis 13. The composite joining component 10 furthermore comprises a drop of adhesive 14, which is pre-applied to the joining component 12.

The joining component 12 has a flange section 16, which is aligned concentrically with respect to the joining axis 13. The joining component 12 furthermore comprises an anchor section, which, in the present case, is designed as a stem and extends from an upper side of the flange section 16.

A joining surface 20 is formed on the underside of the flange section 16 or the opposite side of the flange section 16 from the anchor section 18.

An application section 22, the outer circumference of which is denoted by 23 in Fig. 1, is formed on the joining surface 20.

An annular groove 24, which has an inner wall 26 situated radially on the inside and an outer wall 28 situated radially on the outside, is formed on the joining surface 20, preferably within the application section 22.

The annular groove 24 is aligned concentrically with the joining axis 13.

In Fig. 1, the diameter of the anchor section 18 is denoted by D_{S}. The diameter of the flange section 16 is denoted by D_{F}. The diameter D_{F} is greater than the diameter D_{S}.

The height of the flange section 16 (as viewed in the axial direction) is furthermore denoted by H_{F}. The height or depth of the annular groove 24 is denoted by H_{R}. The height H_{R} is less than the height H_{F} and is preferably greater than 0.1 times the height H_{F} and less than 0.5 times the height H_{F}.

The diameter of the application section 22 is denoted by D_{K}. The diameter D_{K} is preferably less than the diameter D_{F}.

The outside diameter of the outer wall 28 is denoted by D_{A}. The diameter of the inner wall 26 is denoted by D_{R}. The diameter D_{A} is preferably less than the diameter D_{K}. In the illustration in Fig. 1, the diameter D_{R} is greater than the diameter D_{S} but can also be less than the diameter D_{S} or equal to the diameter D_{S}.

The drop of adhesive 14 has been applied to the application section 22 in the heated, liquefied state and has run into a lens shape on the application section 22 and solidified in said lens shape owing to cooling.

During this process, the adhesive fills the annular groove 24, preferably completely.

During solidification due to cooling, the adhesive has contracted in the radial direction, such that the adhesive grips the inner wall 26 of the annular groove 24 and consequently holds the drop of adhesive 14 nonpositively in the axial direction. In the embodiment shown, the inner wall 26 forms an annular contour surface, around which the drop of adhesive 14 has been applied.

The lens-shaped drop of adhesive 14 has an axial height H_{K}. The axial height H_{R} of the inner wall 26 is preferably greater than 0.3 times the axial height H_{K} of the drop of adhesive 14.

In the subsequent Figs 2 to 5, further embodiments of composite joining components or joining components are described, and these correspond in general terms to the joining component or composite joining component in Fig. 1 as regards construction and operation. Identical elements are therefore indicated by identical reference signs. It is essentially the differences which are explained below.

The joining component 12' shown in Fig. 2 comprises a flange section 16', on the joining surface 20' of which an annular groove 24' is formed. A plurality of spacer projections is formed radially to the outside of the annular groove 24', said projections having a height of H_{N}. The height H_{N} is preferably less than the height H_{K}, such that the drop of adhesive 14 of a composite joining component 10 projects above the spacer projections 30.

During the adhesive bonding process, in which the joining component 12' is to be bonded to a workpiece, the drop of adhesive 14 is reactivated and somewhat melted by heating. As the joining component 12' is pressed onto the workpiece, the spacer projections 30 establish a predefined spacing between the joining surface 20' and the surface of the workpiece.

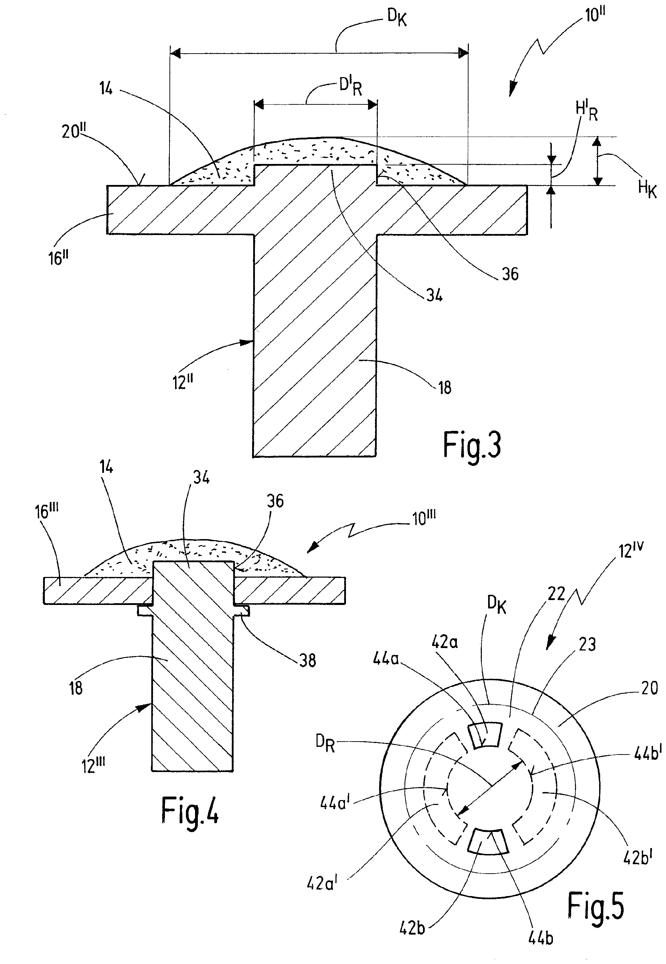

Fig. 3 shows a composite joining component 10", the joining component 12" of which has a flange section 16". In this embodiment, no groove or other recess is formed on the joining surface 20". On the contrary, a projection 34 protruding in the axial direction relative to the joining surface 20" is formed on the joining surface 20", said projection preferably being circular.

An outer surface 36 of the projection 34, said surface being situated radially on the outside, forms an annular contour surface. The projection 34 has a height H_{R'} which is preferably less than the height H_{K} of the drop of adhesive 14. A diameter D_{R'} of the projection 34 is less than the diameter D_{K} of the application section 22. The diameter D_{R'} can be equal to the diameter D_{S} of the stem section 18, for example.

Fig. 4 shows another embodiment of a composite joining component 10"', which corresponds to the composite joining component 10" in Fig. 3 as regards construction and operation.

While the joining component 12" in Fig. 3 is of integral design, the joining component 12'" in Fig. 4 is of two-part design, having an anchor section 18 in the form of a stem and a flange element 16"', which is of annular design.

Here, the stem section 18 passes through a central opening in the flange element 16'" and forms the projection 34 on the side of the joining surface. For positioning, a radial shoulder 38, on which the flange element 16"' is supported, can be provided on the outer circumference of the stem section 18.

The embodiments described above are preferably rotationally symmetrical (apart from the spacer projections 30). The annular contour surfaces 26, 36 are preferably in the form of circular rings and are of encircling design. As an alternative, it is possible for these surfaces to be formed as segments only.

Fig. 5 shows one such embodiment in which at least two groove segments 42a, 42b arranged diametrically with respect to the joining axis are arranged on the joining surface, said segments extending over an angular range of at least 10°. A plurality of such groove segments 42 is preferably provided. Fig. 5 furthermore indicates that the groove segments can also extend over a larger angular range of, for example, more than 90° (shown at 42a', 42b').

In this case, the groove segments 42 form respective contour surfaces 44a, 44b (or 44a', 44b') on an inner wall.

## Claims

1. Composite joining component (10)
- which comprises a joining component (12) having a joining axis (13), having a joining surface (20), which extends transversely to the joining axis (13), and having an anchor section (18), wherein an application section (22) for the application of an adhesive is formed on the joining surface (20), wherein at least one annular contour surface (26; 36; 44) is formed on the application section (22), said contour surface being aligned transversely to the joining surface (20) and being arranged radially within an outer circumference (23) of the application section (22),
- and which comprises a drop of adhesive (14) applied to the application section (22), **characterized in that** the drop of adhesive (14) is applied in a hot, liquid, uncrosslinked state, wherein a non positive gripping effect between the adhesive and the annular contour surface (26; 36; 44) is achieved during shrinkage and a differential thermal expansion of the joining component (12) and the adhesive.

2. Composite joining component according to Claim 1, wherein the annular contour surface has at least two contour segments (26; 36; 44), which are arranged diametrically with respect to the joining axis and each extend over an angular range of at least 10°, in particular over an angular range of at least 30°.

3. Composite joining component according to Claim 1, wherein the annular contour surface (26; 36) is designed to run around the joining axis.

4. Composite joining component according to one of Claims 1-3, wherein the annular contour surface (26; 36; 44) is arranged concentrically with respect to the joining axis (13).

5. Composite joining component according to one of Claims 1-4, wherein the annular contour surface (26; 36; 44) is in the form of a circular ring.

6. Composite joining component according to one of Claims 1-5, wherein the annular contour surface (26; 44) is formed at least partially by a radial inner wall of a groove (24; 42), which is formed in the joining surface (20), wherein the diameter (D_{R}) of the inner wall (26; 44) is less than an outside diameter (D_{K}) of the application section (22).

7. Composite joining component according to one of Claims 1-5, wherein the annular contour surface (36) is formed at least partially by a radial outer wall (36) of a projection (34), which projects relative to the joining surface (20) and the outside diameter (D_{R}) of which is less than an outside diameter (D_{K}) of the application section (22).

8. Composite joining component according to one of Claims 1-7, wherein at least one spacer projection (30), which is arranged radially to the outside of the annular contour surface (26; 36; 44), is formed on the joining surface (20').

9. Composite joining component according to any of Claims 1 to 8, wherein the annular contour surface (26; 36; 44) has an axial height (H_{R}) which is greater than 0.3 times the axial height of the drop of adhesive (14).

10. Method for producing a composite joining component (10) according to any of Claims 1 to 9, comprising the following steps:
- provision of a joining component (12), which has a joining surface (20) extending transversely to a joining axis (13),
- application of a heated adhesive to an application section (22) of the joining surface (20), and
- cooling of the adhesive such that the composite joining component (10) produced in this way can be transported and the adhesive (14) can be reactivated at a later time in order to bond the joining component (12) to a workpiece,
wherein an annular contour surface (26; 36; 44), which extends transversely to the joining surface (20) and around which the adhesive (14) is applied, is formed on the application section (22).

11. Method according to Claim 10, wherein the adhesive (14) is applied to the application section (22) as a drop which forms a lens shape on the application section (22).

12. Method according to Claim 10 or 11, wherein the joining component (12) is produced by cold forming.

## Patentansprüche

1. Fügeverbundbauteil (10),
- das ein Fügebauteil (12) mit einer Fügeachse (13), mit einer quer zu der Fügeachse (13) verlaufenden Fügefläche (20) und einem Ankerabschnitt (18) aufweist, wobei an der Fügefläche (20) ein Auftragungsabschnitt (22) zum Auftragen eines Klebstoffes ausgebildet ist, und wobei an dem Auftragungsabschnitt (22) wenigstens eine Ringkonturfläche (26; 36; 44) ausgebildet ist, die quer zu der Fügefläche (20) ausgerichtet ist und radial innerhalb eines Außenumfanges (23) des Auftragungsabschnittes (22) angeordnet ist,
- und das einen Klebstofftropfen (14) aufweist, der auf den Auftragungsabschnitt (22) aufgebracht ist,
**dadurch gekennzeichnet, dass**
der Klebstofftropfen (14) in einem heißen, flüssigen unvernetzten Zustand aufgebracht ist, wobei zwischen dem Klebstoff und der Ringkonturfläche (26; 36; 44) während der Schrumpfung und einer unterschiedlichen Wärmeausdehnung zwischen Fügebauteil (12) und dem Klebstoff eine kraftschlüssige Verklammerung erzielt ist.

2. Fügeverbundbauteil nach Anspruch 1, wobei die Ringkonturfläche wenigstens zwei diametral zu der Fügeachse angeordnete Konturabschnitte (26; 36; 44) aufweist, die sich jeweils über einen Winkelbereich von wenigstens 10° erstrecken, insbesondere über einen Winkelbereich von wenigstens 30°.

3. Fügeverbundbauteil nach Anspruch 1, wobei die Ringkonturfläche (26; 36) um die Fügeachse umlaufend ausgebildet ist.

4. Fügeverbundbauteil nach einem der Ansprüche 1 - 3, wobei die Ringkonturfläche (26; 36; 44) konzentrisch zu der Fügeachse (13) angeordnet ist.

5. Fügeverbundbauteil nach einem der Ansprüche 1 - 4, wobei die Ringkonturfläche (26; 36; 44) kreisringförmig ist.

6. Fügeverbundbauteil nach einem der Ansprüche 1 - 5, wobei die Ringkonturfläche (26; 44) zumindest teilweise durch eine radiale Innenwand einer Nut (24; 42) gebildet ist, die in der Fügefläche (20) ausgebildet ist, wobei der Durchmesser (D_{R}) der Innenwand (26; 44) kleiner ist als ein Außendurchmesser (D_{K}) des Auftragungsabschnittes (22).

7. Fügeverbundbauteil nach einem der Ansprüche 1 - 5, wobei die Ringkonturfläche (36) zumindest teilweise durch eine radiale Außenwand (36) eines Vorsprunges (34) gebildet ist, der gegenüber der Fügefläche (20) vorsteht und dessen Außendurchmesser (D_{R}) kleiner ist als ein Außendurchmesser (D_{K}) des Auftragungsabschnittes (22).

8. Fügeverbundbauteil nach einem der Ansprüche 1 - 7, wobei an der Fügefläche (20') wenigstens eine Abstandsnase (30) ausgebildet ist, die radial außerhalb der Ringkonturfläche (26; 36; 44) angeordnet ist.

9. Fügeverbundbauteil nach einem der Ansprüche 1 - 8, wobei die Ringkonturfläche (26; 36; 44) eine axiale Höhe (H_{R}) aufweist, die größer ist als das 0,3-fache der axialen Höhe des Klebstofftropfens (14).

10. Verfahren zum Herstellen eines Fügeverbundbauteils (10) nach einem der Ansprüche 1 - 9, mit den Schritten:
- Bereitstellen eines Fügebauteils (12), das eine quer zu einer Fügeachse (13) verlaufende Fügefläche (20) aufweist,
- Auftragen eines erwärmten Klebstoffes auf einen Auftragungsabschnitt (22) der Fügefläche (20), und
- Abkühlen des Klebstoffes, derart, dass das so hergestellte Fügeverbundbauteil (10) transportierbar ist und der Klebstoff (14) zu einem späteren Zeitpunkt reaktivierbar ist, um das Fügebauteil (12) auf ein Werkstück zu kleben,
wobei an dem Auftragungsabschnitt (22) eine gegenüber der Fügefläche (20) quer verlaufende Ringkonturfläche (26; 36; 44) ausgebildet ist, um die herum der Klebstoff (14) aufgebracht wird.

11. Verfahren nach Anspruch 10, wobei der Klebstoff (14) als Tropfen auf den Auftragungsabschnitt (22) aufgetragen wird, der auf dem Auftragungsabschnitt (22) eine Linsenform bildet.

12. Verfahren nach Anspruch 10 oder 11, wobei das Fügebauteil (12) durch Kaltumformung hergestellt wird.

## Revendications

1. Composant d'assemblage composite (10)
- qui comprend un composant d'assemblage (12) comportant un axe d'assemblage (13), comportant une surface d'assemblage (20), qui s'étend transversalement à l'axe d'assemblage (13), et comportant une section d'ancrage (18), dans lequel une section d'application (22) pour l'application d'un adhésif est formée sur la surface d'assemblage (20), dans lequel au moins une surface de contour annulaire (26 ; 36 ; 44) est formée sur la section d'application (22), ladite surface de contour étant alignée transversalement à la surface d'assemblage (20) et étant disposée radialement à l'intérieur d'une circonférence externe (23) de la section d'application (22),
- et qui comprend une goutte d'adhésif (14) appliquée sur la section d'application (22), **caractérisé en ce que** la goutte d'adhésif (14) est appliquée dans un état chaud, liquide et non réticulé, dans lequel un effet d'adhérence non positif entre l'adhésif et la surface de contour annulaire (26 ; 36 ; 44) est obtenu lors du retrait et d'une dilatation thermique différentielle du composant d'assemblage (12) et de l'adhésif.

2. Composant d'assemblage composite selon la revendication 1, dans lequel la surface de contour annulaire comporte au moins deux segments de contour (26 ; 36 ; 44), qui sont disposés diamétralement par rapport à l'axe d'assemblage et s'étendent chacun sur une plage angulaire d'au moins 10 °, en particulier sur une plage angulaire d'au moins 30 °.

3. Composant d'assemblage composite selon la revendication 1, dans lequel la surface de contour annulaire (26 ; 36) est conçue pour s'étendre autour de l'axe d'assemblage.

4. Composant d'assemblage composite selon l'une des revendications 1 à 3, dans lequel la surface de contour annulaire (26 ; 36 ; 44) est disposée concentriquement par rapport à l'axe d'assemblage (13).

5. Composant d'assemblage composite selon l'une des revendications 1 à 4, dans lequel la surface de contour annulaire (26 ; 36 ; 44) est sous la forme d'un anneau circulaire.

6. Composant d'assemblage composite selon l'une des revendications 1 à 5, dans lequel la surface de contour annulaire (26 ; 44) est formée au moins en partie par une paroi interne radiale d'une rainure (24 ; 42), qui est formée dans la surface d'assemblage (20), dans lequel le diamètre (D_{R}) de la paroi interne (26 ; 44) est inférieur à un diamètre extérieur (D_{K}) de la section d'application (22).

7. Composant d'assemblage composite selon l'une des revendications 1 à 5, dans lequel la surface de contour annulaire (36) est formée au moins en partie par une paroi externe radiale (36) d'une partie saillante (34), qui s'avance en saillie par rapport à la surface d'assemblage (20) et dont le diamètre extérieur (D_{R}) est inférieur à un diamètre extérieur (D_{K}) de la section d'application (22).

8. Composant d'assemblage composite selon l'une des revendications 1 à 7, dans lequel au moins une partie saillante d'espacement (30), qui est disposée radialement à l'extérieur de la surface de contour annulaire (26 ; 36 ; 44), est formée sur la surface d'assemblage (20').

9. Composant d'assemblage composite selon l'une des revendications 1 à 8, dans lequel la surface de contour annulaire (26 ; 36 ; 44) a une hauteur axiale (H_{R}) qui est supérieure à 0,3 fois la hauteur axiale de la goutte d'adhésif (14).

10. Procédé de fabrication d'un composant d'assemblage composite (10) selon l'une des revendications 1 à 9, comprenant les étapes suivantes :
- la fourniture d'un composant d'assemblage (12), qui comporte une surface d'assemblage (20) s'étendant transversalement à un axe d'assemblage (13),
- l'application d'un adhésif chauffé sur une section d'application (22) de la surface d'assemblage (20), et
- le refroidissement de l'adhésif de telle sorte que le composant d'assemblage composite (10) produit de cette manière puisse être transporté et que l'adhésif (14) puisse être réactivé ultérieurement afin de lier le composant d'assemblage (12) à une pièce,
dans lequel une surface de contour annulaire (26 ; 36 ; 44), qui s'étend transversalement à la surface d'assemblage (20) et autour de laquelle l'adhésif (14) est appliqué, est formée sur la section d'application (22).

11. Procédé selon la revendication 10, dans lequel l'adhésif (14) appliqué sur la section d'application (22) est une goutte qui s'étend en forme de lentille sur la section d'application (22).

12. Procédé selon la revendication 10 ou 11, dans lequel le composant d'assemblage (12) est produit par formage à froid.
